# EUROPÄISCHE PATENTSCHRIFT

(11) **EP 3 258 150 B1**
(45) Veröffentlichungstag und Bekanntmachung des Hinweises auf die Patenterteilung: **03.07.2019**
(21) Anmeldenummer: 17171443.9
(22) Anmeldetag: 17.05.2017
(51) Int. Cl.: F16L 59/12, F16L 7/00, F16L 9/18

(54) **ROHRANORDNUNG MIT STÜTZABSCHNITTEN AM AUSSENROHR**
BARREL ASSEMBLY WITH SUPPORT SECTIONS AT THE OUTER TUBE
DISPOSITIF DE TUBE AYANT DES PARTIES D'APPUI SUR UN TUBE EXTÉRIEUR

(30) Priorität: 13.06.2016 DE 102016210415
(43) Veröffentlichungstag der Anmeldung: 20.12.2017
(73) Patentinhaber: MTU Aero Engines AG, 80995 München (DE)
(72) Erfinder: Jackson, Hugh Alun John, 85757 Karlsfeld (DE); Bokhorst, Willem, 85241 Hebertshausen (DE); Michl, Manfred, 82216 Gernlinden (DE)

(56) Entgegenhaltungen:
- EP-A1- 1 431 642
- EP-A2- 0 553 936
- WO-A1-00/40886
- DE-A1- 10 028 737

## Beschreibung

Die vorliegende Erfindung betrifft eine Rohranordnung mit einem fluidführenden Innenrohr und einem das Innenrohr umgebenden Außenrohr, wobei zwischen dem Innenrohr und dem Außenrohr Abstandshalter angeordnet sind, derart dass zwischen dem Innenrohr und dem Außenrohr ein Zwischenraum gebildet ist, wobei das Außenrohr an seinem ersten axialen Endabschnitt materialschlüssig mit einem ersten Abstandshalter verbunden ist, der materialschlüssig mit dem Innenrohr verbunden ist, und wobei das Außenrohr an seinem zweiten axialen Endabschnitt wenigstens teilweise mit einem radialen Abstand zu einem zweiten Abstandshalter angeordnet ist, der materialschlüssig mit dem Innenrohr verbunden ist.

Richtungsangaben wie "Axial-" bzw. "axial", "Radial-" bzw. "radial" und "Umfangs-" sind grundsätzlich auf die Achse der Rohranordnung bezogen zu verstehen, sofern sich aus dem Kontext nicht explizit oder implizit etwas anderes ergibt.

Bei doppelwandigen Rohranordnungen, die großen thermischen Belastungen ausgesetzt sind, besteht das Problem, dass ein Außenrohr, das als Hitzeschutz dient, und eine Innenrohr, das beispielsweise ein heißes Fluid, etwa Kühlmittel oder Öl, leitet, relativ zueinander beweglich sein müssen, um unterschiedliche Wärmeausdehnungen kompensieren zu können.

Im Bereich der Gasturbinen ist es bekannt, bei solchen Rohranordnungen den zweiten axialen Endabschnitt des Außenrohres nicht mit dem Innenrohr bzw. dem zugehörigen Abstandshalter zu verbinden, so dass der zweite Endabschnitt frei um den Abstandshalter bzw. das Innenrohr angeordnet ist. In Gasturbinen entstehen im Betrieb mechanische Schwingungen, die sich auch auf solche Rohranordnungen übertragen. Durch derartige mechanische Schwingungen, insbesondere Kombination mit den thermischen Einwirkungen, die zu einer axialen Relativbewegung zwischen Innenrohr und Außenrohr führen, schlägt bzw. reibt der zweite Endabschnitt des Außenrohres am Abstandshalter bzw. am Innenrohr. Dies führt zu einem hohen Verschleiß am zweiten Endabschnitt des Außenrohres und am Abstandshalter bzw. am Innenrohr.

Aus der WO 00/40886 A1 ist ein gattungsgemäßes Doppelrohr bzw. eine Rohranordnung aus einem Innen- und einem Außenrohr bekannt, wobei Innen- und Außenrohr durch in einem Innenbereich befindliche Abstandshalter voneinander beabstandet angeordnet sind. Zusätzlich sind an den Stirnseiten der Rohranordnung aus einem Verschlussring und einem Innenring bestehende Verschlüsse vorgesehen, die eine luftdichte Versiegelung des Innenbereichs zwischen dem Innen- und dem Außenrohr ermöglichen. Das Außenrohr ist durch den auch als Stützelement dienenden Verschlussring zu dem Innenring radial beabstandet. Diese Art des Verschlusses benötigt viele Komponenten und ist daher teuer in der Herstellung.

Aufgabe der Erfindung ist es, eine Rohranordnung bereitzustellen, mit der die obigen Nachteile vermieden werden können.

Zur Lösung dieser Aufgabe wird vorgeschlagen, dass das Außenrohr an seinem zweiten Endabschnitt mehrere in Umfangsrichtung verteilt angeordnete, nach radial innen vorstehende Stützabschnitte aufweist, die mit dem zweiten Abstandshalter in Kontakt stehen und mit dem zweiten Endabschnitt des Außenrohrs einstückig ausgebildet sind.

Die Stützabschnitte liegen kleinflächig oder sogar punktuell an dem Abstandshalter an. Hierdurch wird das Außenrohr relativ zum Innenrohr in Radialrichtung stabilisiert, wobei aber die Relativbewegung des Innenrohrs und des Außenrohrs in Axialrichtung weiterhin möglich ist. Schwingungen, die auf die Rohranordnung wirken, führen somit nicht mehr zu schlagenden Bewegungen des zweiten Endabschnitts des Außenrohrs, so dass dem raschen Verschleiß entgegengewirkt werden kann.

Erfindungsgemäß sind die Stützabschnitte einstückig mit dem zweiten Endabschnitt des Außenrohres ausgebildet. Dabei können die Stützabschnitte radial nach innen verformte Bereiche des Außenrohres sein. Auf diese Weise können die Stützabschnitte sehr einfach am zweiten Endabschnitt des Außenrohres hergestellt werden.

Weiter wird vorgeschlagen, dass die Stützabschnitte nach radial innen konvex ausgebildet sind. Es ist insbesondere möglich, dass jeder Stützabschnitte eine Art Kugelkalotte bilden, die mit ihrem höchsten Punkt am Abstandshalter anliegen.

Um eine stabile Lagerung des Außenrohrs am Innenrohr zu ermöglichen, können am zweiten Endabschnitt des Außenrohres wenigstens drei Stützabschnitte vorgesehen sein, die in Umfangsrichtung gleichmäßig verteilt angeordnet sind. Im Falle von drei Stützabschnitten, die jeweils um 120° zueinander verteilt angeordnet sind, kann eine optimale Abstützung am Abstandshalter ermöglicht werden. Bei einem größeren Umfang können aber auch mehr Stützabschnitte vorgesehen sein.

Die Erfindung betrifft ferner auch eine Gasturbine, insbesondere Fluggasturbine, mit wenigstens einer oben beschriebenen Rohranordnung. Dabei kann eine solche Rohranordnung als Zuleitung oder Ableitung von Kühlmittel, Öl oder dergleichen ausgeführt sein.

Schließlich betrifft die Erfindung auch noch eine Verfahren zur Herstellung einer Rohranordnung, umfassend die Schritte:
Bereitstellen eines Innenrohres;
Bereitstellen eines Außenrohres;
Bereitstellen von wenigstens zwei Abstandshaltern die entlang dem Innenrohr in einem axialen Abstand zueinander angeordnet werden;
Materialschlüssiges Verbinden der Abstandshalter mit dem Innenrohr;
Materialschlüssiges Verbinden des Außenrohres an seinem ersten axialen Endabschnitt mit einem der Abstandshalter;
Verformen des zweiten axialen Endabschnitts des Außenrohres an mehreren Stellen entlang des Umfangs zur Herstellung von radial nach innen vorstehenden Stützabschnitten, die mit dem anderen Abstandshalter in Kontakt stehen.

Die Reihenfolge dieser Schritte ist dabei im Rahmen der vorliegenden Erfindung nicht festgeschrieben, sondern kann auch anders sein als oben aufgeführt. Insbesondere ist es möglich, dass die Verformung des zweiten Endabschnitts des Außenrohrs bereits vor dem Aufschieben des Außenrohrs über das Innenrohr erfolgt. Die durch die Verformung erzeugten Stützabschnitt können auf Grund ihrer Form in einem gewissen Umfang in radialer Richtung federelastische Eigenschaften aufweisen und somit beim Aufschieben des Außenrohrs über das Innenrohr eine in Radialrichtung wirkende Vorspannkraft auf den zweiten Abstandshalter bzw. auf das Innenrohr ausüben.

Bei einem solchen Verfahren kann der zweite Endabschnitt des Außenrohres zur Ausbildung der Stützabschnitte verformt werden, nachdem das Außenrohr mit seinem ersten Endabschnitt bereits materialschlüssig mit dem einen Abstandshalter bzw. dem Innenrohr verbunden worden ist. Das Verformen, insbesondere das Ausgestalten von nach radial innen konvexen Stützabschnitten kann mittels geeigneter Werkzeuge erfolgen, etwa mit einem kugelförmigen Pressabschnitt der in Radialrichtung von außen auf den zweiten Endabschnitt des Außenrohres einwirkt.

Nachfolgend wird die Erfindung unter Bezugnahme auf die anliegenden Figuren beispielhaft und nicht einschränkend beschrieben.
Fig. 1 zeigt eine Rohranordnung in einem Längsschnitt
Fig. 2 zeigt eine Querschnittsdarstellung der Rohranordnung entsprechend der Schnittlinie A-A der Fig. 1.

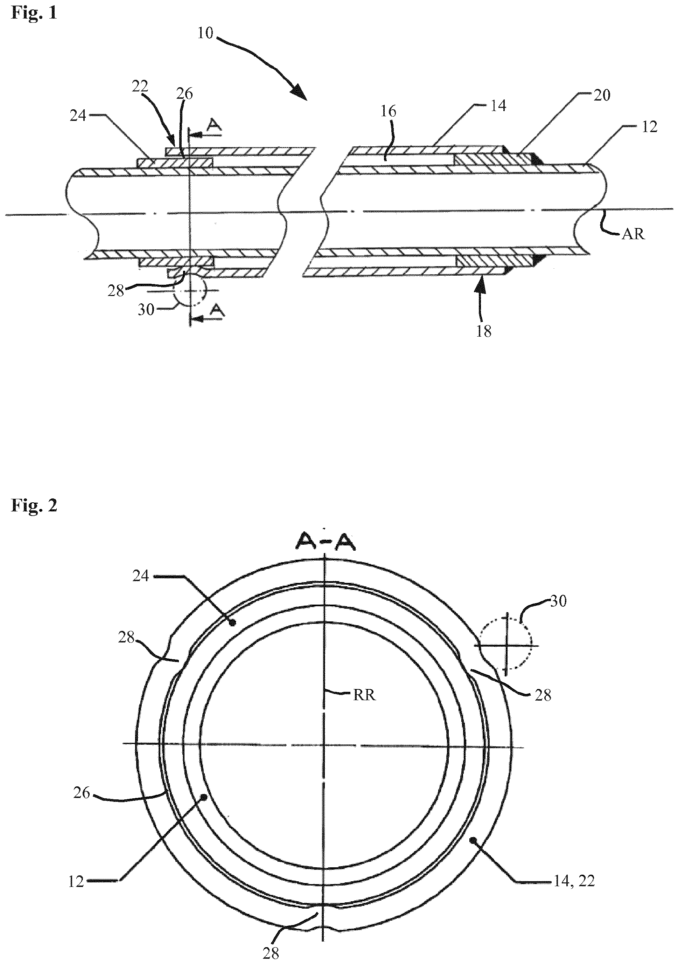

In Fig. 1 ist schematisch und vereinfacht eine Rohranordnung 10 dargestellt. Die Rohranordnung 10 umfasst ein Fluid führendes Innenrohr 12 und ein Außenrohr 14. Das Außenrohr 14 ist über die hier nicht vollständig dargestellte Gesamtlänge mit einem Abstand zum Innenrohr 12 angeordnet, so dass zwischen dem Innenrohr 12 und dem Außenrohr 14 ein Zwischenraum 16 gebildet ist. Das Außenrohr 14 weist einen ersten axialen Endabschnitt 18 auf. Der erste axiale Endabschnitt 18 ist mit einem ersten Abstandshalter 20 materialschlüssig verbunden, insbesondere mit diesem verschweißt oder verlötet. Der erste Abstandshalter 20 ist mit dem Innenrohr 12 materialschlüssig verbunden, insbesondere verschweißt oder verlötet. Somit ist das Außenrohr 14 an seinem ersten axialen Endabschnitt 18 am Innenrohr 12 befestigt und fixiert. Mit AR ist die Achse der Rohranordnung 10 bezeichnet, die der Axialrichtung entspricht.

Das Außenrohr 14 weist einen zweiten axialen Endabschnitt 22 auf. Der zweite axiale Endabschnitt 22 umgibt einen zweiten Abstandshalter 24, der mit dem Innenrohr 12 materialschlüssig verbunden ist. Zwischen dem zweiten Abstandshalter 24 und dem zweiten Endabschnitt 22 des Außenrohres 14 ist in Umfangsrichtung teilweise ein Zwischenraum 26 gebildet.

Ferner weist der zweite axiale Endabschnitt 22 mehrere Stützabschnitte 28 auf, von denen in der Fig. 1 einer und in der Fig. 2 drei ersichtlich sind. Die Stützabschnitte 28 stehen nach radial innen vor und berühren den zweiten Abstandshalter 24. Anders ausgedrückt ist der zweite axiale Endabschnitt 22 mittels der Stützabschnitte 28 am Abstandshalter 24 bzw. am Innenrohr 12 in radialer Richtung gelagert. Hierdurch wird einer Relativbewegung in Radialrichtung zwischen dem Außenrohr 14 und dem Innenrohr 12 entgegengewirkt, oder diese Relativbewegung sogar verhindert. In der Fig. 2 sind drei Stützabschnitte 28 dargestellt. Bei einem größeren Umfang des Innenrohrs und entsprechend größerem Umfang des Außenrohrs 14 können aber auch mehr als drei Stützabschnitte 28 vorgesehen sein. Um eine in Radialrichtung möglichst spielfreie Lagerung des zweiten axialen Endabschnitts 22 zu ermöglichen, sind die Stützabschnitte 28 entlang dem Umfang regelmäßig verteilt angeordnet. Im vorliegenden Beispiel sind drei Stützabschnitte jeweils in einem Winkel von 120° zueinander angeordnet. Dieser Winkel wird entsprechend kleiner, wenn mehr als drei Stützabschnitte vorgesehen sind.

In der Fig.1 und der Fig. 2 ist ferner rein schematisch mittels eines gestrichelten Kreises 30 ein Presswerkzeug angedeutet, mit dem die Stützabschnitte 28 hergestellt werden können durch Verformen des zweiten axialen Endabschnitts 22 des Außenrohrs 14. Entsprechend weisen die Stützabschnitte 28 radial innen die Form eines Kugelsegments bzw. einer Kugelkalotte auf. Wenn die Stützabschnitte 28 eine kugelartige Ausgestaltung aufweisen, liegen sie eher punktuell am Abstandshalter 24. Diese punktuelle Anlage reicht für eine Sicherung in Radialrichtung RR aus, schränkt aber die Relativbewegung in Axialrichtung nur unwesentlich sein, so dass das Innenrohr 12 und das Außenrohr 14 sich in Axialrichtung relativ zueinander bewegen können, insbesondere aufgrund thermischer Einwirkungen.

Zum Herstellen einer Rohranordnung 10 können folgende Arbeitsschritte ausgeführt werden, wobei gemäß der vorliegenden Erfindung die Reihenfolge der Arbeitsschritte nicht zwingend wie nachfolgend beschrieben sein muss. Zunächst werden ein Innenrohr 12 und ein Außenrohr 14 bereitgestellt. Wenigstens zwei Abstandshalter 20, 24 werden zur Verfügung gestellt, die entlang dem Innenrohr 12 in einem axialen Abstand zueinander angeordnet werden. Die Abstandshalter 20, 24 werden mit dem Innenrohr 12 materialschlüssig verbunden, insbesondere verschweißt oder verlötet. Das Außenrohr 14 wird über das Innenrohr 12 in Axialrichtung aufgeschoben und anschließend wird der erste axiale Endabschnitt 18 des Außenrohres mit dem ersten Abstandshalter 20 materialschlüssig verbunden, insbesondere verschweißt oder verlötet. Schließlich wird der zweite axiale Endabschnitt 22 des Außenrohres 14 an mehreren Stellen entlang des Umfangs umgeformt, zur Herstellung der radial nach innen vorstehenden Stützabschnitte 26, die mit dem zweiten Abstandshalter 24 in Kontakt stehen. Das Verformen des zweiten Endabschnitts 22 erfolgt dabei mittels eines Presswerkzeugs, das dazu eingerichtet ist, die gewünschte Form des Stützabschnitts 28 zu erzeugen. Insbesondere ist es aber im Rahmen der vorliegenden Erfindung auch möglich, dass die Verformung des zweiten Endabschnitts 22 des Außenrohrs 14 bereits vor dem Aufschieben des Außenrohrs 14 über das Innenrohr 12 erfolgt. Die durch die Verformung erzeugten Stützabschnitt 28 können auf Grund ihrer Form in einem gewissen Umfang in radialer Richtung federelastische Eigenschaften aufweisen und somit beim Aufschieben des Außenrohrs 14 über das Innenrohr 12 eine in Radialrichtung wirkende Vorspannkraft auf den zweiten Abstandshalter 24 bzw. auf das Innenrohr 12 ausüben.

### Bezugszeichenliste

- 10: Rohranordnung
- 12: Innenrohr
- 14: Außenrohr
- 16: Zwischenraum
- 18: erster axialer Endabschnitt
- 20: erster Abstandshalter
- 22: zweiter axialer Endabschnitt
- 24: zweite Abstandshalter
- 26: Zwischenraum
- 28: Stützabschnitt
- 30: Presswerkzeug

## Patentansprüche

1. Rohranordnung (10) mit einem fluidführenden Innenrohr (12) und einem das Innenrohr (12) umgebenden Außenrohr (14),
wobei zwischen dem Innenrohr (12) und dem Außenrohr (14) Abstandshalter (20, 24) angeordnet sind, derart dass zwischen dem Innenrohr (12) und dem Außenrohr (24) ein Zwischenraum (16) gebildet ist,
wobei das Außenrohr (14) an seinem ersten axialen Endabschnitt (18) materialschlüssig mit einem ersten Abstandshalter (20) verbunden ist, der materialschlüssig mit dem Innenrohr (12) verbunden ist, und
wobei das Außenrohr (14) an seinem zweiten axialen Endabschnitt (22) wenigstens teilweise mit einem radialen Abstand (26) zu einem zweiten Abstandshalter (24) angeordnet ist, der materialschlüssig mit dem Innenrohr (12) verbunden ist,
wobei das Außenrohr (14) an seinem zweiten Endabschnitt (22) mehrere in Umfangsrichtung verteilt angeordnete, nach radial innen vorstehende Stützabschnitte (28) aufweist, die mit dem zweiten Abstandshalter (24) in Kontakt stehen,
**dadurch gekennzeichnet,**
**dass** die Stützabschnitte (28) einstückig mit dem zweiten Endabschnitt (22) des Außenrohres (14) ausgebildet sind.

2. Rohranordnung nach Anspruch 1, **dadurch gekennzeichnet, dass** die Stützabschnitte (28) radial nach innen verformte Bereiche des Außenrohres (14) sind.

3. Rohranordnung nach einem der vorhergehenden Ansprüche, **dadurch gekennzeichnet, dass** die Stützabschnitte (26) nach radial innen konvex ausgebildet sind.

4. Rohranordnung nach einem der vorhergehenden Ansprüche, **dadurch gekennzeichnet, dass** am zweiten Endabschnitt (22) des Außenrohres (14) wenigstens drei Stützabschnitte (28) vorgesehen, die in Umfangsrichtung gleichmäßig verteilt angeordnet sind.

5. Gasturbine, insbesondere Fluggasturbine mit wenigstens einer Rohranordnung (10) nach einem der vorhergehenden Ansprüche.

6. Verfahren zur Herstellung einer Rohranordnung, umfassend die Schritte:
Bereitstellen eines Innenrohres (12);
Bereitstellen eines Außenrohres (14);
Bereitstellen von wenigstens zwei Abstandshaltern (20, 24) die entlang dem Innenrohr (12) in einem axialen Abstand zueinander angeordnet werden;
Materialschlüssiges Verbinden der Abstandshalter (20, 24) mit dem Innenrohr (12);
Materialschlüssiges Verbinden des Außenrohres (14) an seinem ersten axialen Endabschnitt (18) mit einem der Abstandshalter (20);
Verformen des zweiten axialen Endabschnitts (22) des Außenrohres (14) an mehreren Stellen entlang des Umfangs zur Herstellung von radial nach innen vorstehenden Stützabschnitten (28), die mit dem anderen Abstandshalter (24) in Kontakt stehen.

## Claims

1. Pipe arrangement (10) comprising a fluid-conducting inner pipe (12) and an outer pipe (14) that surrounds the inner pipe (12), spacers (20, 24) being arranged between the inner pipe (12) and the outer pipe (14) such that a gap (16) is formed between the inner pipe (12) and the outer pipe (24), the outer pipe (14) being integrally joined, at its first axial end portion (18), to a first spacer (20) which is integrally joined to the inner pipe (12), and the outer pipe (14) being arranged, at its second axial end portion (22), at least in part at a radial distance (26) from a second spacer (24) which is integrally joined to the inner pipe (12), the outer pipe (14) comprising, at its second end portion (22), a plurality of support portions (28) that are arranged in a distributed manner in the circumferential direction, project radially inward and are in contact with the second spacer (24), **characterized in that** the support portions (28) are formed in one piece with the second end portion (22) of the outer pipe (14).

2. Pipe arrangement according to claim 1, **characterized in that** the support portions (28) are regions of the outer pipe (14) that are deformed radially inward.

3. Pipe arrangement according to either of the preceding claims, **characterized in that** the support portions (26) are convex in the radially inward direction.

4. Pipe arrangement according to any of the preceding claims, **characterized in that** at least three support portions (28) are provided on the second end portion (22) of the outer pipe (14), which support portions are arranged in uniform distribution in the circumferential direction.

5. Gas turbine, in particular an aircraft gas turbine, having at least one pipe arrangement (10) according to any of the preceding claims.

6. Method for producing a pipe arrangement, comprising the steps of:
providing an inner pipe (12);
providing an outer pipe (14);
providing at least two spacers (20, 24) which are arranged along the inner pipe (12) at an axial distance from one another;
integrally joining the spacers (20, 24) to the inner pipe (12);
integrally joining the outer pipe (14), at its first axial end portion (18), to one of the spacers (20);
deforming the second axial end portion (22) of the outer pipe (14) at several points along the circumference in order to produce support portions (28) which project radially inward and are in contact with the other spacer (24).

## Revendications

1. Agencement de tuyaux (10) doté d'un tuyau intérieur (12) de transport de fluide et d'un tuyau extérieur (14) entourant le tuyau intérieur (12), dans lequel une entretoise (20, 24) est disposée entre le tuyau intérieur (12) et le tuyau extérieur (14), de sorte qu'un espace intermédiaire (16) soit formé entre le tuyau intérieur (12) et le tuyau extérieur (14), dans lequel le tuyau extérieur (14) est relié, dans sa première partie d'extrémité (18) axiale, par une liaison de matière à une première entretoise (20), qui, à son tour, est reliée par une liaison de matière au tuyau intérieur (12), et dans lequel le tuyau extérieur (14) est disposé au moins en partie, dans sa deuxième partie d'extrémité (22) axiale, avec une distance radiale (26) par rapport à une deuxième entretoise (24), qui à son tour est reliée par une liaison de matière au tuyau intérieur (12), dans lequel le tuyau extérieur (14) présente, dans sa deuxième partie d'extrémité (22) plusieurs sections d'appuis (28) reparties dans la direction circonférentielle et disposées en saillie radialement vers l'intérieur, lesquelles sont en contact avec la deuxième entretoise (24), **caractérisé en ce que** les sections d'appuis (28) sont formées en une seule pièce avec la deuxième partie d'extrémité (22) du tuyau extérieur (14).

2. Agencement de tuyaux selon la revendication 1, **caractérisé en ce que** les sections d'appuis (28) sont des zones radialement déformées vers l'intérieur du tuyau extérieur (14).

3. Agencement de tuyaux selon l'une des revendications précédentes, **caractérisé en ce que** les sections d'appuis (26) sont radialement convexes vers l'intérieur.

4. Agencement de tuyaux selon l'une des revendications précédentes, **caractérisé en ce qu'**au moins trois sections d'appuis (28) sont prévues dans la deuxième partie d'extrémité (22) du tuyau extérieur (14), lesquelles sections d'appuis sont uniformément réparties dans la direction circonférentielle.

5. Turbine à gaz, en particulier turbine à gaz d'avion, dotée d'un ou de plusieurs agencement(s) de tuyaux (10) selon l'une des revendications précédentes.

6. Procédé de fabrication d'un agencement de tuyaux comprenant les étapes consistant à :
prévoir un tuyau intérieur (12) ;
prévoir un tuyau extérieur (14) ;
prévoir au moins deux entretoises (20, 24) disposées le long du tuyau intérieur (12) à une distance axiale l'une de l'autre ;
relier les entretoises (20, 24) au tuyau intérieur (12) par une liaison de matière ;
relier le tuyau extérieur (14), dans sa première partie d'extrémité axiale (18), à l'une des entretoises (20) par une liaison de matière ;
déformer la deuxième partie d'extrémité axiale (22) du tuyau extérieur (14) à plusieurs endroits le long de la circonférence pour produire des sections d'appuis (28) faisant saillie radialement vers l'intérieur et en contact avec l'autre entretoise (24).
